# EUROPEAN PATENT SPECIFICATION

(11) **EP 2 136 113 B1**
(45) Date of publication and mention of the grant of the patent: **03.05.2017**
(21) Application number: 08712137.2
(22) Date of filing: 29.02.2008
(51) Int. Cl.: F16J 15/24, F16J 15/20, F16J 15/22

(54) **GLAND PACKING**
STOPFBUCHSE
GARNITURE D'ÉTANCHÉITÉ

(30) Priority: 08.03.2007 JP 2007058647
(43) Date of publication of application: 23.12.2009
(73) Proprietor: NIPPON PILLAR PACKING CO., LTD., Osaka-shi, Osaka 532-0022 (JP)
(72) Inventor: UEDA, Takahisa, Sanda-shi Hyogo 669-1333 (JP); FUJIWARA, Masaru, Sanda-shi Hyogo 669-1333 (JP); TANABE, Hiroki, Sanda-shi Hyogo 669-1333 (JP); SUGITA, Katsunori, Sanda-shi Hyogo 669-1333 (JP)
(74) Representative: Fleuchaus, Michael A.
(86) International application number: PCT/JP2008/053615
(87) International publication number: WO 2008/108290

(56) References cited:
- EP-A1- 1 582 785
- EP-A2- 1 473 493
- JP-A- H02 255 786
- JP-A- H02 255 786
- JP-A- H04 224 371
- JP-A- H10 132 087
- JP-A- H10 184 928
- JP-A- H11 336 911
- JP-A- 2002 340 198
- US-A1- 2004 021 274

## Description

### Technical Field

The present invention relates to a gland packing which is mainly used as leakproofing means in a fluid apparatus such as a pump or a valve.

### Background Art

A gland packing of this kind is produced by first braiding fibers to be formed into a cord-like shape, impregnating the fibers with a filler material, and then shaping the cord-like braided fibers which are impregnated with the filler material, into a ring-like shape. Usually, the thus produced gland packing is inserted into and mounted in a pressed state on a gland portion of a fluid apparatus such as a valve, and acts as sealing means for preventing a fluid from leaking. As the fiber material, asbestos, a fluororesin, aramid, carbon fibers, and various other organic fibers are used. These fibers are used in forms such as a multifilament in which many long fibers are assembled, a spun yarn in which short fibers (staples) are spun, and a multiple twisted yarn in which these fibers are assembled and twisted.

Recently, because of high adaptability and sealing property with respect to a counter member, a gland packing using expanded graphite is mainly used. As disclosed in Patent Literature 1, for example, a gland packing is known which is configured by braiding or twisting a plurality of expanded graphite-made braiding yarns that are externally reinforced by spirally winding a reinforcing wire member around an expanded graphite base member by means of twisting or the like.

The above-described gland packing is used in a shaft sealing portion of a fluid apparatus such as a stuffing box, and various other places such as a piping system for high-purity liquid, ultrapure water, cleaning liquid, or washing liquid that is handled in a production process in various technical fields such as semiconductor production, medical and pharmaceutical production, food processing, and chemical industry. In the case where the gland packing is used in, among such uses, a piping system handling a food such as drinking water or edible oil, there is a little problem. Namely, a gland packing in which expanded graphite is used as the main raw material is black in color, and hence the user has an image that, when such a gland packing is used, the food is colored or stained (actually, the food is not colored), and, in some cases, there is a tendency that the use of such a gland packing is avoided.

It seems that, when basalt fibers which is known in Patent Literature 2 or the like is used as a relatively whitish fiber material, it is possible to erase the above-mentioned negative image due to the use of expanded graphite. However, basalt fibers have a large fiber diameter and are highly elastic, and hence there is a problem in that the fibers are difficult to be in close contact with the counter member (the fibers are inferior in adaptability). When, in order to solve the problem, a configuration of applying a high surface pressure for a close contact is employed, there arises a new problem in that basalt fibers are easily broken. In this way, materials for a gland packing remain to have room for further improvement.
Patent Literature 1: Japanese Patent Application Laying-Open No. 2005-291264
Patent Literature 2: Japanese Patent Application Laying-Open No. 2006-347845

Prior art document JP H10 132087 A describes a packing with a free length for better usability and general purpose property of packing.

Document EP1 582 785 A1 describes a braiding yarn made of expanded graphite and gland packing for greater adaptability.

US 2004/021274 A1 relates to a structural material for a gland packing, which can be used favorably as a gland packing in a spiral or annular form.

Prior art document EP 1 473 493 A2 describes a sealing arrangement in particular for machine components.

Document JP H02 255786 A describes a gland packing useful for sealing revolving shaft of pump, valve, etc. JP H10 132087 A discloses a gland packing according to the preamble of claim 1.

### Disclosure of the Invention

### Problems to be Solved by the Invention

It is an object of the invention to provide a gland packing which is improved so as to have a satisfactory sealing property despite a whitish appearance by performing further improvements of compensating the above-described disadvantages of basalt fibers to combine the features of relatively whitish basalt fibers with the feature of the excellent sealing property due to expanded graphite.

### Means for Solving the Problems

The invention set forth in claim 1, is characterized in that, in a gland packing, a covered yarn 1 configured by covering basalt fibers 11 with organic fibers 12 is braided around an inner core member 3 made of expanded graphite, wherein a component ratio of organic fibers 12 in the covered yarn 1 is set to 10 to 40 wt%.

The invention set forth in claim 2 is characterized in that, in a gland packing according to claim 1, the organic fibers 12 are aramid fibers.

### Effects of the Invention

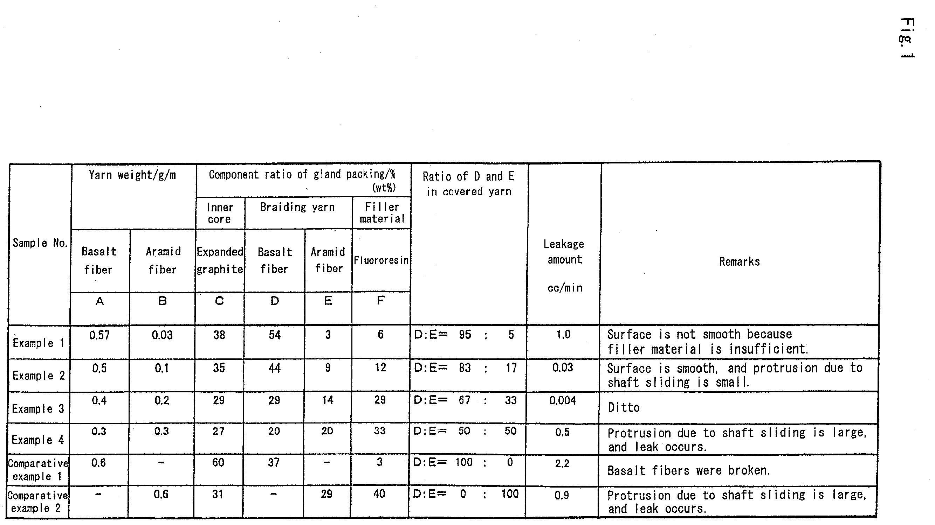

According to the invention set forth in claim 1, the covered yarn which is positioned in an outer circumferential portion of the packing is covered with the organic fibers that have a low elasticity, and hence exhibits an excellent close contact property with respect to the counter face in pressurization. Even when the basalt fibers are broken at a high surface pressure load, the basalt fibers are in a state where they are held in a sheath of the organic fibers which are not broken, and hence the characteristics are not largely changed, so that the leakproofing function is maintained. Since the basalt fibers of the core portion are excellent in heat resistance and strength, strength reduction and creep which may be generated in an organic-fiber packing do not occur even under conditions of high temperature and high pressure. The sliding face of the packing is not configured by basalt fibers, but by organic fibers. Consequently, there are advantages that the friction resistance is low, and that the color tone can be changed and set (for example, a white color such as snow white). Therefore, the gland packing can be used also in a piping system handling a food such as drinking water or edible oil, without producing a psychological resistance. Furthermore, an excellent gland packing in which the leakage amount per unit time can be suppressed to a very low level is enabled, and there are further advantages that the surface is smooth, and that protrusion due to shaft sliding is small (see Fig. 1).

As a result, it is possible to provide a gland packing which is improved so as to have a satisfactory sealing property despite a whitish appearance, by performing further improvements of compensating disadvantages of basalt fibers to combine features of relatively whitish basalt fibers with the feature of excellent sealing property due to expanded graphite. In this case, as set forth in claim 2, the organic fibers may be configured by aramid fibers, so that, although having a whitish tone, the gland packing is excellent in strength and heat resistance, and advantageous in sealing property.

### Brief Description of the Drawings

[Fig. 1] Fig. 1 is a table showing various characteristics of examples and comparative examples.
[Fig. 2] Fig. 2 is a side view showing a multifilament.
[Fig. 3] Fig. 3 is a partially broken side view showing a covered yarn.
[Fig. 4] Fig. 4 is a perspective view showing the structure of a packing which is braided into a cord-like shape.
[Fig. 5] Fig. 5 is a partially broken perspective view showing a gland packing.
[Fig. 6] Fig. 6 is a side view showing a twisted yarn.
[Fig. 7] Fig. 7 is a partially developed side view showing a twin twisted yarn.
[Fig. 8] Fig. 8 is a view showing a relationship graph between a compression ratio and a tightening surface pressure in packings.
[Fig. 9] Fig. 9 is a view showing a bar graph which compares moduli of elasticity in packings.
[Fig. 10] Fig. 10 is a view showing a relationship table between an elapsed time and a leakage amount in packings.

### Description of Reference Numerals

- 1: covered yarn
- 3: inner core member
- 11: basalt fiber
- 12: organic fiber (aramid fiber)
- □: winding angle of organic fiber

### Best Mode for Carrying Out the Invention

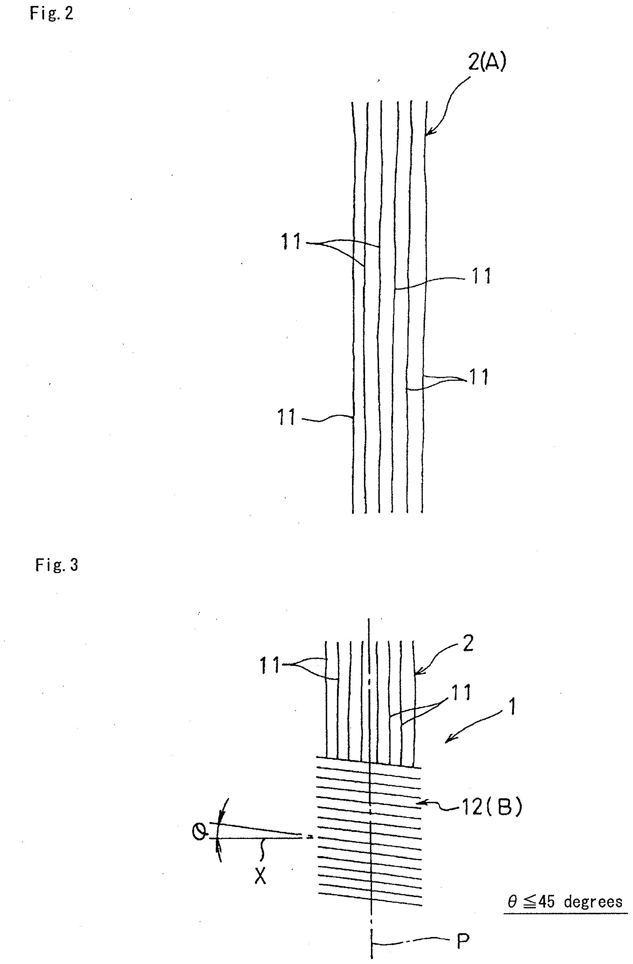

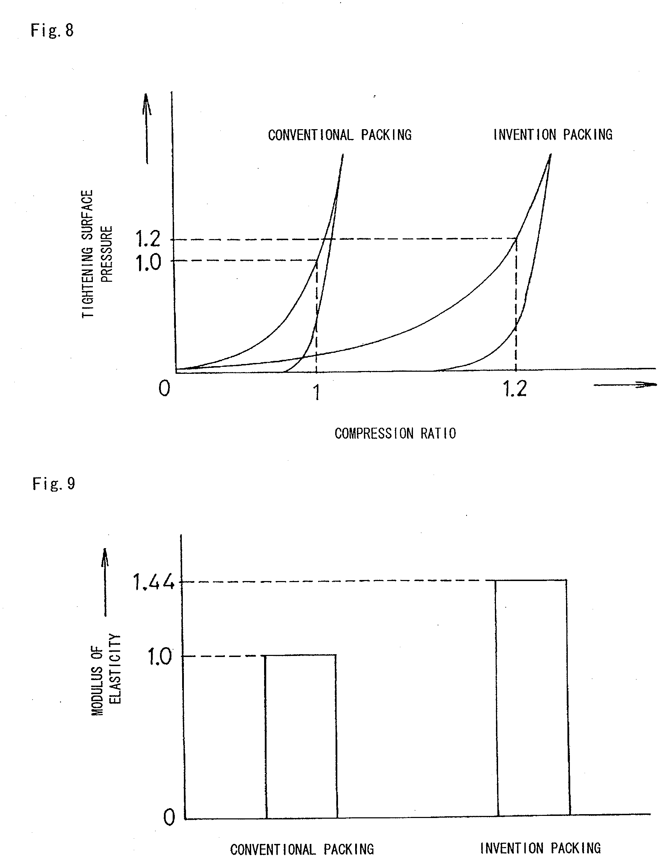

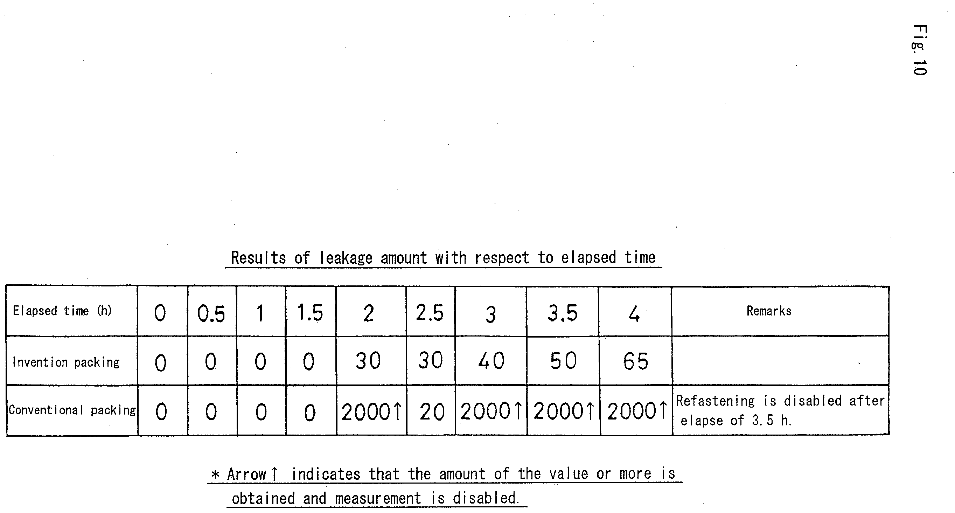

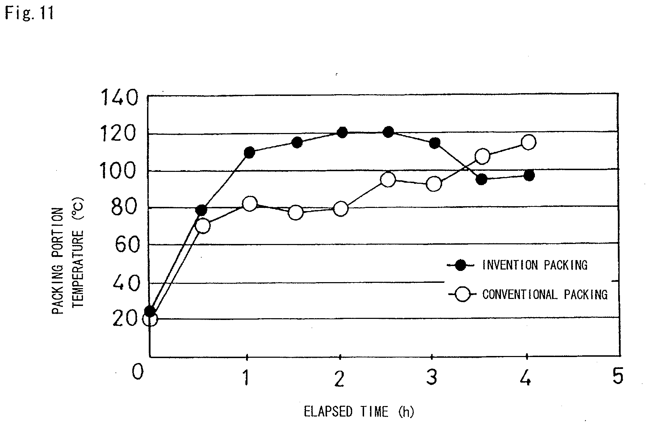

Hereinafter, an embodiment of the gland packing of the invention will be described with reference to the drawings. Fig. 1 is a table showing various characteristics of gland packings, Figs. 2, 6, and 7 are views showing various multifilaments, Figs. 3 to 5 are views respectively showing a covered yarn, a cord-like braided packing, and a gland packing, Figs. 8 and 9 are a relationship graph and bar graph related to a modulus of elasticity, and Figs. 10 and 11 are a table and graph related to a leakage amount.

Basalt fibers are artificial amorphous mineral fibers which are melt spun at a high temperature with employing natural basalt as 100% material, and used as an asbestos substitute material. In basalt continuous fibers, the maximum working temperature reaches 820°C, and the use environment at a high temperature is excellent as compared with the working temperature of 480°C in glass fibers. For example, basalt continuous long fibers can be produced by washing crushed basalt rock having a size similar to that of gravel, melt heating the rock at 1,500 to 1,600°C, and pulling fibers at a speed of exceeding 3,500 m per second while the viscosity of the molten material in the fiber forming zone is made higher than 100 poises. The basalt long fibers have a melt temperature which is as high as 1,050°C, are not liquefied but crystallized in an incinerator unlike glass fibers, and therefore are environment-responsive fibers which does not damage an incinerator.

Basalt fibers are characterized in that they are excellent in items of (1) a wide working temperature range: -250 to +600°C, (2) low hygroscopicity, (3) chemical resistance: acid resistance, alkali resistance, (4) abrasion resistance, (5) high tensile strength, (6) high electrical insulation property, (7) sound insulation property, and (8) flexibility. The raw material of asbest is configured by various asbestos, and asbest is natural crystalline fibers and has a single fiber diameter of 0.03 to 0.1 µm. By contrast, basalt fibers made of basalt are artificial amorphous fibers and have a single fiber diameter of 9 to 17 µm (the average is 13 µm).

A multifilament 2 [indicated by A (unit: g/m), see Fig. 2] configured by a large number of basalt fibers 11 having a fiber diameter of about 13 µm is prepared. Short fibers [indicated by B (unit: g/m)] of meta-aramid fibers (an example of organic fibers) 12 are wound around the multifilament at a winding angle (the angle with respect to a line segment X which is perpendicular to the axis P of the multifilament 2) □, thereby producing a covered yarn 1 (see Fig. 3). Preferably, the winding angle □ of the aramid fibers 12 is set to 45 degrees or less.

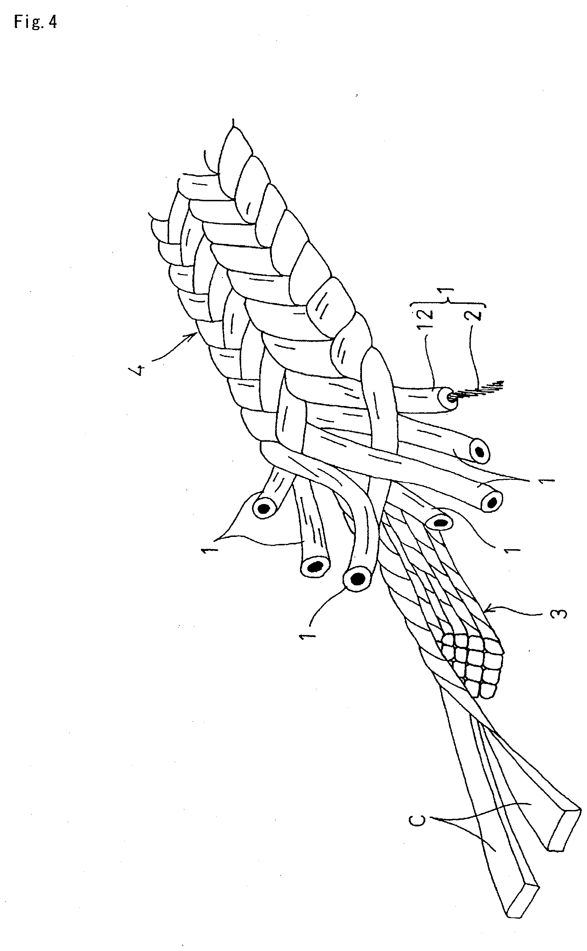

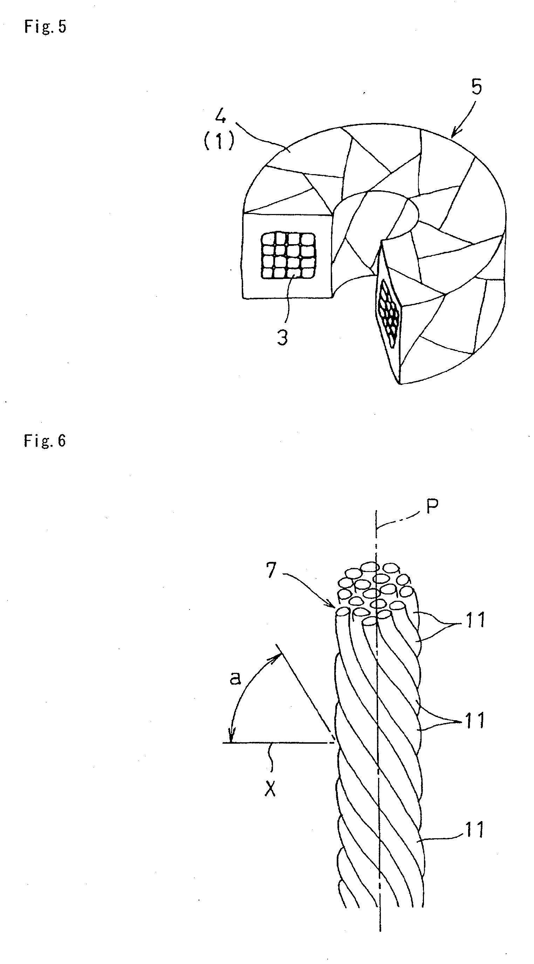

Then, a yarn configured by expanded graphite C(%) is used as an inner core member 3, the inner core member 3 is covered by the basalt fibers 11 [this is indicated by D] and the covered yarn 1 configured by aramid fibers 12 (an example of organic fibers, and indicated by E) which cover the basalt fibers, and, as shown in Fig. 4, a cord-like braided packing 4 of 8 mm square is produced. The packing 4 is mold-formed into a ring-like shape having, for example, an inner diameter of 32 mm, an outer diameter of 48 mm, and a height (thickness) of 8 mm, thereby producing a gland packing 5 shown in Fig. 5.

Here, aramid fibers are one kind of nylon. Unlike usual nylon, aramid fibers employ a polymer having a stiff structure which includes benzene rings, and in which they are coupled through amido bonds, as a raw material, and are often called aromatic nylon. Depending on the components, aramid is classified into the para system and the meta system. The para system is very strong, and its tensile strength is about 2.5 times that of nylon. Para-aramid fibers are used in tire cords, a belt, a bulletproof jacket, a protective suit, an aircraft member, concrete reinforcement, etc. Meta-aramid fibers are excellent in heat resistance and flame resistance, and used in a flame-resistant cloth, a protective suit, a working cloth, a refractory filter, a wire coating material, etc.

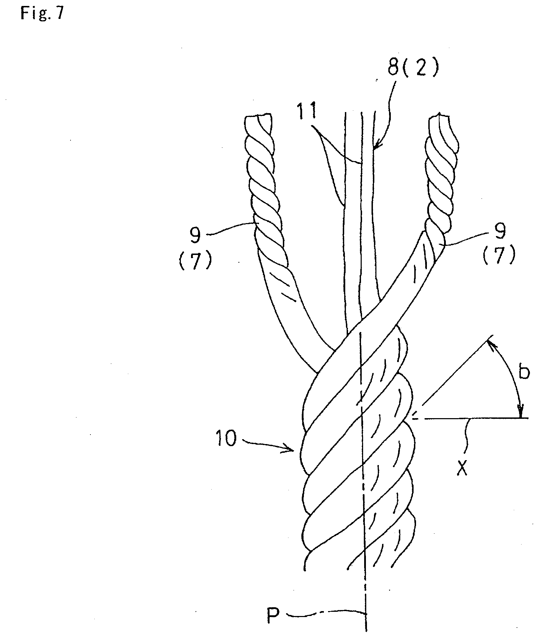

The multifilament A may be a twisted yarn 7 which, as shown in Fig. 6, is configured by twisting a plurality (many) of basalt fibers 11. When the twisted yarn 7 is covered by organic fibers (for example: aramid fibers), a covered yarn is produced. In this case, the twisting angle a may be set to, for example, 70 degrees. Alternatively, another angle may be employed. As shown in Fig. 7, a multifilament (an assembled and twisted multifilament) A configured by a twisted yarn 10 in which several linear basalt fiber multifilaments 8 are covered by twisting a plurality of twisted yarns (yarns which have undergone a twisting process as shown in Fig. 6) 9 configured by basalt fiber multifilaments may be employed. In Fig. 7, the twisted yarn 10 is formed as a twin twisted yarn using two twisted yarns 9, 9, and the twisting angle b is set to, for example, 50 degrees. When the twisted yarn 10 is covered by organic fibers (for example: aramid fibers), it is possible to form a covered yarn.

Namely, the gland packing 5 of the invention is configured by braiding the covered yarn 1 configured by covering the basalt fibers 11 with the organic fibers 12 around the inner core member 3 made of the expanded graphite C. However, a fluororesin is used as a filler material F in an impregnation process. In this case, the component ratio of the organic fibers 12 in the covered yarn 1 is set to 10 to 40 wt% [wt is an abbreviation of weight]. Various tests in which the thus produced gland packing 5 is used as samples (Examples 1 to 4, Comparative examples 1, 2) are conducted, and conditions, results, and studies of the tests are mentioned in the followings.

In the characteristic table shown in Fig. 1, in Examples 1 to 4, the braiding yarn is configured by the basalt fibers 11 and the organic fibers 12, i.e., by the covered yarn 1, and, in Comparative examples 1, 2, the braiding yarn is configured only by the basalt fibers 11, or only by the organic fibers 12. The yarn weight means the weight (g: gram) of the basalt fiber A and the aramid fiber B per unit length (m: meter), and the leakage amount (unit: cc/min) is a description of a result of a sliding gas seal test (described later). With respect to the component ratio of the organic fibers 12 in the covered yarn 1 (the value of E of "Ratio of D and E" in Fig. 1), Examples 2, 3 are within the range of 10 to 40 wt%, and Examples 1, 4 are outside the range.

In the sliding gas seal test which is conducted on the gland packings of Examples 1 to 4 and Comparative examples 1, 2, six packings having an inner diameter of 32 mm, an outer diameter of 48 mm, and a thickness of 8 mm are used, a tightening process is performed at a tightening pressure of 30 N/mm², nitrogen gas which is 2 MPa at room temperature (ordinary temperature) is used as a fluid, a shaft sliding operation is performed at 10 mm/sec. and 20 mm □ one reciprocation, and, after 1,000 reciprocations, a leakage gas from the atmosphere side is recovered to measure the leakage amount. Next, the modulus of elasticity (compression and restoration test) and the low-speed dry sliding test will be described.

### [Re modulus of elasticity]

In order to obtain the modulus of elasticity, the compression and restoration test was conducted. The conditions of the compression and restoration test are as follows: the packing size is 9.5 mm square; the number of the packing is 1; the cross head speed is 1.0 mm/min; and initial surface pressure/maximum surface pressure is 0.02 (N/mm²) /2 (N/mm²) = 0.01. Actually, the test is conducted in the following manner. Namely, the test is conducted in steps of starting the test from a state where the initial load of 0.02 N/mm² which is 1% of the maximum surface pressure is applied, and returning to 0.02 N/mm² via the maximum surface pressure. The modulus of elasticity is calculated and studied from a compression and restoration curve obtained from the test, and a gland packing (conventional packing) made of PTFE-impregnated asbestos was used as a comparative control. Fig. 8 shows a relationship graph between the modulus of elasticity and a tightening surface pressure, and Fig. 9 shows a bar graph which compares moduli of elasticity.

From Figs. 8, 9, it is seen that the modulus of elasticity of the invention packing which is the gland packing of the invention is lower by about 30% than that of the conventional packing which is a conventional asbestos-made packing. This means that, in the case where packings attain the same sealing performance, the invention packing is soft with respect to the shaft, and it can be said that the invention packing is superior in shaft abrasion property than the conventional packing. In the case where axial runout or the like occurs, a packing repeats minute deformation. At this time, a packing having a low modulus of elasticity shows a small amount of change of the surface pressure exerted on a shaft, and hence the invention packing is seemed to have a high axial runout performance and a less amount of heat caused by sliding. Therefore, the shaft abrasion performance, axial runout performance, and heat generation performance of the invention packing are satisfactory. In refastening, a packing having a low modulus of elasticity is soft. In the case of refastening, therefore, a sudden change of the surface pressure of the packing on the shaft with respect to the same refastening amount hardly occurs. Therefore, it can be said that the packing is a packing which can be easily refastened.

### [Re low-speed dry sliding test]

The conditions of the low-speed dry sliding test are as follows: the used fluid: nitrogen at a pressure of 0.2 Mpa; the packing size is 10 mm square; the number of rotations: 320 (per minute); the peripheral speed: 1 m/s; the number of the packings is 4; and the packing fastening surface pressure is 0.5 N/mm². In the test, after a packing is inserted, the initial fastening surface pressure of 2.0 N/mm² is loaded, and evaluation is performed while a shaft is rotated in a state where the pressure is then reduced to 0.5 N/mm². The surface pressure during the evaluation is loaded by the system (live load system) in which the fastening force is maintained by using a spring. The leakage amount and temperature from the start of the test to an elapse of four hours are measured, and the relationship between the packing temperature and the leakage amount is studied. In the case where a gap is formed between a spring collar and a packing gland when the leakage amount reaches a value (120 ml/min) which is twice the shaft diameter, it is seemed that stress relaxation occurs and the fastening surface pressure is lowered, and hence refastening is not performed until the gap is eliminated.

Fig. 10 shows a table showing a relationship between the elapsed time and the leakage amount in the low-speed dry sliding test, and Fig. 11 shows a relationship graph between the elapsed time and the packing portion temperature. The invention packing resulted in that, when the packing portion temperature reaches 120°C after elapse of two hours, a leakage occurs, and the temperature is gradually lowered together with slight increase of the leakage amount. In the invention packing, the leakage amount does not exceed 120 ml/min which is a defined amount, and hence the test was ended with performing no refastening. The packing portion temperature of the conventional packing which is a comparative control is raised to 100°C after elapse of two hours, and a leakage occurs and thereafter is rapidly increased. When refastening is performed, the leakage amount is once reduced. After elapse of three hours, however, the leakage amount is again increased. The packing portion temperature continues to be raised in a state where a gap is not formed between a spring collar and a packing gland and refastening cannot be performed. After elapse of four hours, finally, the maximum temperature was recorded in a state where the leakage amount exceeds 2,000 ml/min.

As described above, the gland packing of the invention is configured by braiding the covered yarn configured by covering basalt fibers with aramid fibers, around the inner core member made of expanded graphite. Therefore, it has been succeeded to provide an expanded graphite-made gland packing having high adaptability and sealing property with respect to a counter member, as a gland packing having a whitish tone so that it can be used also in a piping system handling a food such as drinking water or edible oil, without producing a psychological resistance. The impregnation of organic fibers with a filler material (a fluororesin or the like: see Fig. 1) F can contribute to leakage prevention, and can provide further an advantage that formation of foreign substances caused by breakage during the production process can be prevented from occurring.

## Claims

1. A gland packing wherein a covered yarn (1) is braided around an inner core member (3) made of expanded graphite,
**characterized in that**
the covered yarn (1) is configured by covering basalt fibers (11) with organic fibers (12), and a component ratio of said organic fibers (12) in said covered yarn (1) set to 10 to 40 wt%.

2. A gland packing according to claim 1, wherein said organic fibers (12) are aramid fibers.

## Patentansprüche

1. Stopfbuchse, bei der ein umwundenes Garn (1) um ein inneres Kernelement (3) aus expandiertem Graphit geflochten ist,
**dadurch gekennzeichnet, dass**
das umwundene Garn (1) durch Umwinden von Basaltfasern (1) mit organischen Fasern (12) ausgebildet ist und
ein Komponentenverhältnis der organischen Fasern (12) in dem umwundenen Garn (1) auf 10 bis 40 Gew.-% eingestellt ist.

2. Stopfbuchse gemäß Anspruch 1, bei der die organischen Fasern (12) Aramidfasern sind.

## Revendications

1. Garniture de presse-étoupe, dans laquelle un fil enveloppé (1) est tressé autour d'un élément de noyau intérieur (3) fait de graphite expansé,
**caractérisée en ce que**
le fil enveloppé (1) est configuré par la couverture de fibres de basalt (11) avec des fibres organiques (12), et
un rapport de composant desdites fibres organiques (12) dans ledit fil enveloppé (1) définit de 10 à 40 % en poids.

2. Garniture de presse-étoupe selon la revendication 1, dans laquelle les fibres organiques (12) sont des fibres d'aramide.
